# EUROPÄISCHE PATENTANMELDUNG

(11) **EP 3 813 291 A1**
(43) Veröffentlichungstag der Anmeldung: **28.04.2021**
(21) Anmeldenummer: 19205262.9
(22) Anmeldetag: 25.10.2019
(51) Int. Cl.: H04L 9/08

(54) **VORRICHTUNG UND VERFAHREN ZUM BEREITSTELLEN EINES SITZUNGSSCHLÜSSELS**

(71) Anmelder: Siemens Aktiengesellschaft, 80333 München (DE)
(72) Erfinder: Falk, Rainer, 85586 Poing (DE)

(57) **Zusammenfassung**

Die Erfindung betrifft ein Verfahren, um einen Sitzungsschlüssel Seitenkanal-gehärtet an eine (Hardware) Crypto-Engine zu übermitteln. Dies ist besonders vorteilhaft, wenn der Sitzungsschlüssel einen hohen Schutzbedarf aufweist, sodass der Schutz durch die Übertragung über einen Secure Channel alleine nicht ausreicht, um das erforderliche Schutzniveau zu erreichen.

## Beschreibung

Die Erfindung bezieht sich auf eine Vorrichtung und ein Verfahren, um einen maskierten Sitzungsschlüssel bereitzustellen.

Nachfolgend werden Aspekte der Erfindung erläutert.

Kryptographiesteuerungsvorrichtung aufweisend:
- ein Sitzungsschlüsselgenerierungsmodul, wobei das Sitzungsschlüsselgenerierungsmodul dazu eingerichtet ist, einen Sitzungsschlüssel zu berechnen;
- einen Zufallsgenerator, wobei der Zufallsgenerator dazu eingerichtet ist, einen Zufallswert zu berechnen;
- ein Maskierungsschlüsselberechnungsmodul, wobei
   ∘ das Maskierungsschlüsselberechnungsmodul dazu eingerichtet ist, mittels einer Schlüsselmaskierungsfunktion anhand eines geheimen Schlüssels und des Zufallswertes einen Maskierungsschlüssel zu berechnen,
   ∘ mittels des Maskierungsschlüssels ein maskierter Sitzungsschlüssel anhand des Sitzungsschlüssels berechnet wird;
- eine Kommunikationsschnittstelle, wobei die Kommunikationsschnittstelle dazu eingerichtet ist, den maskierten Sitzungsschlüssel an einen Empfänger zu übertragen.

Der Sitzungsschlüssel kann beispielsweise abhängig von einem Hauptschlüssel (z. B. ein gerätespezifischer Schlüssel) sein. Hierzu wird der Sitzungsschlüssel z. B. von dem Hauptschlüssel durch eine Schlüsselableitungsfunktion abgleitet.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter einer "Prüfsumme" kann im Zusammenhang mit der Erfindung beispielsweise eine kryptographische Prüfsumme, eine digitale Signatur oder ein digitales Zertifikat verstanden werden.

Bei weiteren Ausführungsformen der Kryptographiesteuerungsvorrichtung ist die Schlüsselmaskierungsfunktion eine Non-Linear-Map-Funktion. Dabei kann es sich beispielsweise um eine beliebige nichtlineare Abbildung handeln.

Bei weiteren Ausführungsformen der Kryptographiesteuerungsvorrichtung ist der maskierte Sitzungsschlüssel ein verschlüsselter maskierter Sitzungsschlüssel, wobei der verschlüsselte maskierte Sitzungsschlüssel mittels einer Verschlüsselungsfunktion unter Verwendung des Sitzungsschlüssels und des Maskierungsschlüssels berechnet wird, wobei zusätzlich zum maskierten Sitzungsschlüssel, der ein verschlüsselter maskierter Sitzungsschlüssel ist, der Zufallswert an den Empfänger übertragen wird. Weiterhin ist es beispielsweise möglich, dass z. B. der Sitzungsschlüssel im Sinne der Erfindung ein mit einem weiteren geheimen Schlüssel verschlüsselter Sitzungsschlüssel ist. Der mit dem weiteren geheimen Schlüssel verschlüsselte Sitzungsschlüssel kann z. B. auch als "Black Session Key Blob" bezeichnet werden. Dieser schon kryptographisch verschlüsselte Sitzungsschlüssel wird z. B. nochmal maskiert unter Verwendung des Maskierungsschlüssels.

Bei weiteren Ausführungsformen der Kryptographiesteuerungsvorrichtung ist der geheime Schlüssel ein für eine seitenkanal-gehärtete Maskierung des Sitzungsschlüssels geeigneter Schlüssel.

Bei weiteren Ausführungsformen der Kryptographiesteuerungsvorrichtung ist die Verschlüsselungsfunktion eine asymmetrische kryptographische Verschlüsselungsfunktion oder eine symmetrische kryptographische Verschlüsselungsfunktion oder eine hybride kryptographische Verschlüsselungsfunktion.

Bei weiteren Ausführungsformen der Kryptographiesteuerungsvorrichtung ist der Empfänger eine Kryptographiebeschleunigungsvorrichtung.

Bei weiteren Ausführungsformen der Kryptographiesteuerungsvorrichtung erfolgt die Übertragung des maskierten Sitzungsschlüssels über einen kryptographisch geschützten Übertragungskanal.

Bei weiteren Ausführungsformen der Kryptographiesteuerungsvorrichtung ist der geheime Schlüssel ein gerätespezifischer geheimer Schlüssel.

Gemäß einem weiteren Aspekt betrifft die Erfindung ein System, beispielsweise ein Gerät, aufweisend:
- eine erfindungsgemäße Kryptographiesteuerungsvorrichtung oder eine ihrer genannten Ausführungsformen;
- einen Empfänger, der beispielsweise eine erfindungsgemäße Kryptographiebeschleunigungsvorrichtung ist;
- einen Übertragungskanal, wobei der Übertragungskanal dazu eingerichtet ist, den Empfänger und die Kryptographiesteuerungsvorrichtung kommunikativ zu koppeln.

Bei weiteren Ausführungsformen des Systems ist die Kryptographiesteuerungsvorrichtung und/oder der Empfänger jeweils ein integrierter Halbleiterbaustein.

Bei weiteren Ausführungsformen des Systems ist das System ein Hardware-Sicherheitsmodul oder ein Multi-Chip-Modul.

Gemäß einem weiteren Aspekt betrifft die Erfindung ein computerimplementiertes Verfahren zum Übertragen eines maskierten Sitzungsschlüssels mit folgenden Verfahrensschritten:
- Berechnen eines Sitzungsschlüssels
- Berechnen eines Zufallswertes mittels eines Zufallszahlengenerators;
- Berechnen eines Maskierungsschlüssel mittels einer Schlüsselmaskierungsfunktion anhand eines geheimen Schlüssels und des Zufallswertes;
- Ermitteln eines maskierten Sitzungsschlüssels anhand des Sitzungsschlüssels und des Maskierungsschlüssels;
- Übertragen des maskierten Sitzungsschlüssels an einen Empfänger.

Bei weiteren Ausführungsformen des Verfahrens umfasst das Verfahren weitere Verfahrensschritte, um die funktionalen Merkmale der Kryptographiesteuerungsvorrichtung oder um weitere Merkmale der Ausführungsumgebung bzw. deren Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder eine zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Kryptographiesteuerungsvorrichtung oder das System erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die Kryptographiesteuerungsvorrichtung oder das System erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies explizit in dem jeweiligen Ausführungsbeispiel genannt sein muss.

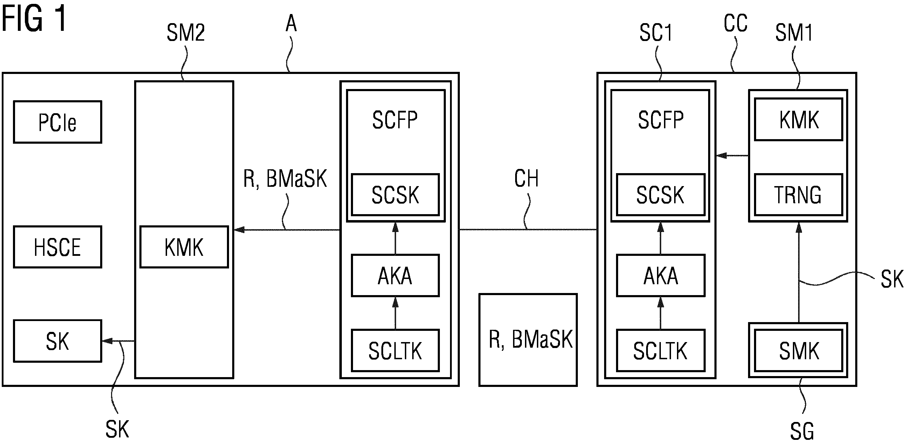

Fig. 1 zeigt ein Ausführungsbeispiel der Erfindung.

Im Einzelnen zeigt die Fig. 1 ein System, das eine Kryptographiesteuerungsvorrichtung CC und/oder eine Kryptographiebeschleunigungsvorrichtung A (z. B. ein Empfänger) umfasst.

Die Kryptographiesteuerungsvorrichtung CC kann beispielsweise ein Sicherheitsprozessor (z. B. ein Crypto-Controller) oder ein Sicherheitselement (engl. Secure Element) oder ein Hardware-Sicherheitsmodul sein. Die Kryptographiebeschleunigungsvorrichtung A kann beispielsweise ein Prozessor wie z. B. ein ASIC oder ein FPGA oder ein Netzwerkprozessor sein. Die Kryptographiesteuerungsvorrichtung CC und die Kryptographiebeschleunigungsvorrichtung A können z. B. als integrierte Halbleiterbausteine des Systems realisiert sein, wobei das System z. B. ein Gerät ist. Das System oder das Gerät können dabei ein Feldgerät, eine Fertigungsmaschine, ein Steuergerät (z. B. in einem Fahrzeug) oder ein Gerät eines cyberphysikalischen Systems (z. B. eines Fertigungssystems), ein Satellitennavigationsempfänger oder ein Internet-der-Dinge-Gerät sein. Die beiden Halbleiterbausteine bzw. Vorrichtungen können z. B. in einem Hardware-Sicherheitsmodul oder einem Multi-Chip-Modul integriert sein.

Die Kryptographiesteuerungsvorrichtung CC und die Kryptographiebeschleunigungsvorrichtung A sind über einen kryptographisch geschützten Übertragungskanal CH miteinander verbunden. Der Übertragungskanal kann z. B. mittels I2C, SPI, RS232 oder USB realisiert werden. Entsprechend umfassen die Kryptographiesteuerungsvorrichtung CC und die Kryptographiebeschleunigungsvorrichtung A jeweils entsprechende Kommunikationsschnittstellen (z. B. I2C, SPI, RS232 und/oder USB).

Die Kryptographiesteuerungsvorrichtung CC kann zudem beispielsweise ein Sitzungsschlüsselgenerierungsmodul SG, einen Zufallsgenerator TRNG, ein Maskierungsschlüsselberechnungsmodul SM1 und die Kommunikationsschnittstelle SC1 umfassen, die über einen internen Bus oder ein Bussystem der Kryptographiesteuerungsvorrichtung CC kommunikativ verbunden sind. Der Zufallsgenerator TRNG kann dabei beispielsweise als eigenständiges Modul der Kryptographiesteuerungsvorrichtung CC ausgebildet sein. Alternativ kann das Sitzungsschlüsselgenerierungsmodul SG den Zufallsgenerator TRNG umfassen oder das Maskierungsschlüsselberechnungsmodul SM1 kann den Zufallsgenerator TRNG umfassen.

Das Sitzungsschlüsselgenerierungsmodul SG ist dazu eingerichtet, einen Sitzungsschlüssel SK zu berechnen. Der Zufallsgenerator TRNG ist dazu eingerichtet, einen Zufallswert R zu berechnen. Das Maskierungsschlüsselberechnungsmodul SM1 ist dazu eingerichtet, mittels einer Schlüsselmaskierungsfunktion anhand eines geheimen Schlüssels SMK und des Zufallswertes R einen Maskierungsschlüssel KMK zu berechnen. Der geheime Schlüssel SMK kann beispielsweise von dem Sitzungsschlüsselgenerierungsmodul SG verwaltet werden. Beispielsweise ist der Schlüssel SMK dann in diesem Modul gespeichert. Alternativ kann der geheime Schlüssel SMK beispielsweise von dem Maskierungsschlüsselberechnungsmodul SM1 verwaltet werden. Beispielsweise ist der Schlüssel SMK dann in diesem Modul gespeichert.

Mittels des Maskierungsschlüssels KMK wird ein maskierter Sitzungsschlüssel MaSK anhand des Sitzungsschlüssels SK durch das Maskierungsschlüsselberechnungsmodul SM1 berechnet.

Die Kommunikationsschnittstelle SC1 ist dazu eingerichtet, den maskierten Sitzungsschlüssel MaSK an einen Empfänger (z. B. der Kryptographiebeschleunigungsvorrichtung A) zu übertragen.

Die Schlüsselmaskierungsfunktion kann eine Non-Linear-Map-Funktion (NLM) sein.

In einer Variante des Ausführungsbeispiels ist der maskierte Sitzungsschlüssel MaSK ein verschlüsselter maskierter Sitzungsschlüssel BMaSK. Der verschlüsselte maskierte Sitzungsschlüssel BMaSK wird mittels einer Verschlüsselungsfunktion (z. B. einer Verschlüsselungsfunktion nach dem ElGamal-Verschlüsselungsverfahren) unter Verwendung des Sitzungsschlüssels SK und des Maskierungsschlüssels KMK berechnet. Die Kommunikationsschnittstelle SC1 überträgt dann zusätzlich zum maskierten Sitzungsschlüssel MaSK, der der verschlüsselte maskierte Sitzungsschlüssel BMaSK ist, den Zufallswert R an den Empfänger.

In einer weiteren Variante ist der verschlüsselte maskierte Sitzungsschlüssel BMaSK zusätzlich "geschwärzt". Geschwärzt bedeutet, dass der verschlüsselte maskierte Sitzungsschlüssel BMaSK zusätzlich ein weiteres Mal verschlüsselt ist. Beispielsweise kann hierfür ein anderes Verschlüsselungsverfahren gewählt werden (z. B. ein symmetrisches Verschlüsselungsverfahren) und/oder es kann z. B. ein weiterer Verschlüsselungsschlüssel verwendet werden. Beispielsweise wird der Sitzungsschlüssel SK mittels des Maskierungsschlüssels KMK maskiert und zusätzlich mittels des weiteren Verschlüsselungsschlüssel verschlüsselt um den verschlüsselten maskierten Sitzungsschlüssel BMaSK und/oder den geschwärzten verschlüsselten maskierten Sitzungsschlüssel zu berechnen.

Beispielsweise kann der verschlüsselte maskierte Sitzungsschlüssel BMaSK mit einer asymmetrischen Verschlüsselungsfunktion (z. B. ElGamal) berechnet werden. Der geschwärzte verschlüsselte maskierte Sitzungsschlüssel wird dann z. B. anhand des weiteren Verschlüsselungsschlüssel mittels eines symmetrischen Verschlüsselungsverfahrens (z. B. AES) gebildet.

Weiter kann die Kryptographiebeschleunigungsvorrichtung A eine Crypto-Engine HSCE umfassen, die hier über eine PCIe-Schnittstelle PCIe genutzt werden kann (z. B. zur Verschlüsselung/Entschlüsselung von IP-Kommunikation bei einem VPN oder zum Auslesen einer PRN-Code-Folge für eine Spreizbandmodulation). Bei der Crypto-Engine HSCE handelt es sich vorzugsweise um eine Hardware-basierte Crypto-Engine (z. B. als Teil eines ASIC oder FPGA realisiert), die z. B. hoch performant ist.

Die Crypto-Engine HSCE wird vom der Kryptographiesteuerungsvorrichtung CC konfiguriert, insbesondere kann dabei ein Nutzerschlüssel von der Kryptographiesteuerungsvorrichtung CC an die Kryptographiebeschleunigungsvorrichtung A (z. B. ein ASIC) über den Übertragungskanal CH übertragen werden. Bei dem Übertragungskanal CH kann es sich z. B. um einen Secure Channel handeln, der als kryptographisch geschützte SPI-Schnittstelle realisiert ist. Der Übertragungskanal CH ist z. B. durch einen Secure-Channel-Sitzungsschlüssel SCSK mittels eines entsprechenden Sicherungsverfahrens SCFP kryptographisch geschützt, wobei der Secure-Channel-Sitzungsschlüssel SCSK durch eine Authentisierung- und Schlüsselvereinbarung AKA (engl. authentication and key agreement) unter Nutzung eines Secure-Channel-Longterm-Keys SCLTK eingerichtet wird. Der Secure-Channel-Longterm-Keys SCLTK kann z. B. in einem batteriegepufferten Speicher oder in eFuses gespeichert sein. Alternativ kann er durch eine Digitalschaltung wiederholbar gebildet werden.

Über den auf diese Weise gesicherten Übertragungskanal CH kann zwischen der Kryptographiesteuerungsvorrichtung CC und der Kryptographiebeschleunigungsvorrichtung A wird der verschlüsselte maskierte Sitzungsschlüssel BMaSK und/oder der maskierter Sitzungsschlüssel MaSK übertragen werden.
Dabei kann die Kryptographiesteuerungsvorrichtung CC den Sitzungsschlüssel SK z. B. unter einer Nutzung eines Geräteschlüssels bilden. Beispielsweise wird dann der verschlüsselte maskierte Sitzungsschlüssel BMaSK und/oder der maskierte Sitzungsschlüssel MaSK unter Nutzung des einen Maskierungsschlüssel KMK gebildet. Die Kryptographiebeschleunigungsvorrichtung A empfängt den verschlüsselten maskierten Sitzungsschlüssel BMaSK und/oder den maskierten Sitzungsschlüssel MaSK, bildet den Sitzungsschlüssel SK anhand des verschlüsselten maskierten Sitzungsschlüssels BMaSK und/oder des maskierten Sitzungsschlüssels MaSK. Die Crypto-Engine HSCE wird anhand des verschlüsselten maskierten Sitzungsschlüssels BMaSK und/oder des maskierten Sitzungsschlüssels MaSK konfiguriert, sodass der Sitzungsschlüssel (hier über eine PCIe-Schnittstelle) zur Verschlüsselung, Entschlüsselung oder zur Bildung einer PRN-Codefolge verwendet werden kann.

Die Erfindung zeigt eine verbesserte Variante zum geschützten Laden eines Schlüssels in einen Hardware-Crypto-Beschleuniger (z. B. Crypto-Engine HSCE). Hierzu wird abhängig von einem Zufallsparameter (z. B. dem Zufallswert R) der maskierte Sitzungsschlüssel MaSK und/oder der verschlüsselte maskierte Sitzungsschlüssel BMaSK, z. B. mit einem abhängig von einem Zufallsparameter gebildeten Schlüssel, Sitzungsschlüssel von der Kryptographiesteuerungsvorrichtung CC (z. B. ein Crypto-Controller) an die Kryptographiebeschleunigungsvorrichtung A (z. B. ein HW-Crypto-Beschleuniger) über einen kryptographisch geschützten (z. B. verschlüsselten und/oder authentisieren und/oder integritätsgeschützten) Kommunikationskanal (z. B. der Übertragungskanal CH) übertragen.

Der maskierte Sitzungsschlüssel MaSK ist beispielsweise ein Sitzungsschlüssel SK, der abhängig von einer Zufallszahl (z. B. dem Zufallswert R) codiert ist (dies ist z. B. als Verallgemeinerung einer reinen Maskierung, einer Verschlüsselung oder eines Key Wrap zu verstehen). Der Sitzungsschlüssel SK wird vorzugsweise nicht direkt im Klartext über den Übertragungskanal CH übertragen, sondern in einer codierten Form (also maskierten Form). Die Crypto-Engine HSCE verwendet den maskierten Sitzungsschlüssel MaSK für eine kryptographische Operation (Verschlüsselung, Entschlüsselung, Erzeugen einer kryptographischen PRN-Codefolge; PRN: pseudo random noise). Die Kryptographiesteuerungsvorrichtung CC ermittelt dazu den Sitzungsschlüssel SK beispielsweise unter Nutzung eines LongTerm-Keys und einer kryptographischen Schlüsselableitungsfunktion. Der Zufallszahl R wird z. B. Nutzung eines (physikalischen) Zufallszahlengenerators berechnet. Beispielsweise wird in Abhängigkeit vom Zufallswert R eine randomisierte maskierte Codierung von Sitzungsschlüssels SK als maskierter Sitzungsschlüssel MaSK gebildet.

Der maskierte Sitzungsschlüssel MaSK wird an die Crypto-Engine HSCE über einen kryptographisch geschützten Übertragungskanal (z. B. Übertragungskanal CH) übertragen. Dabei wird vorzugsweise für jede Übertragung eines Sitzungsschlüssels ein Randomisierungsparameter (z. B. der Zufallswert R) neu gebildet und verwendet.

Die Maskierungsfunktion zum Berechnen des maskierten Sitzungsschlüssels MaSK kann dabei durch eine additive Maskierung erfolgen, die auch als boolesche Maskierung bezeichnet wird:
MaSK:= mSK1 | | mSK2mit SK:= mSK1 XOR mSK2

Alternativ kann sie auch als multiplikative Maskierung oder eine affine Maskierung realisiert sein.
MaSK:= mSK1 * mSK2, (Multiplikation)

Weiterhin kann eine Non-Linear-Map-Funktion NLM zum Bestimmen des maskierten Sitzungsschlüssels verwendet werden:
SK: MaSK:= R | | (NLM(R, SMK) XOR SK),
wobei SMK ein geheimer Schlüssel SMK zum Maskieren ist. Dieser geheime Schlüssel, wird für die seitenkanal-gehärtete Maskierung des Sitzungsschlüssels verwendet wird.

Die Kryptographiebeschleunigungsvorrichtung A kann dann aus dem empfangenen Zufallswert R den Sitzungsschlüssel SK und/oder den einen Maskierungsschlüssel (KMK) mittels der Non-Linear-Map-Funktion (z. B. NLM(R, SMK)) ermitteln. Beispielsweise kann dies wie folgt durchgeführt werden:
Beispielsweise kann die Crypto Engine den maskierten Sitzungsschlüssel MaSK direkt verwenden, indem von der Crypto Engine z. B. eine Demaskierungsfunktion (z. B. die Non-Linear-Map-Funktion) verwendet wird, oder der Sitzungsschlüssel SK wird direkt anhand des maskierten Sitzungsschlüssel MaSK ermittelt, indem eine entsprechende Demaskierungsfunktion auf den maskierten Sitzungsschlüssel MaSK angewendet wird.

Die Demaskierungsfunktion kann z. B. wie folgt realisiert sein:
NLM(R, SMK) | | | | (NLM(R, SMK) XOR SK)

Die Demaskierungsfunktion kann z. B. durch eine XOR-Verknüpfung realisiert sein, um eine unmaskierte Darstellung des Sitzungsschlüssels SK zu ermitteln.

In weiteren Varianten erfolgt eine Verschlüsselung des Sitzungsschlüssels, sodass ein verschlüsselter Sitzungsschlüssel als maskierter Sitzungsschlüssel MaSK vorliegt. Dabei wird z. B. ein zufälliger Parameter verwendet, um den Verschlüsselungsschlüssel zum Bilden des maskierten Sitzungsschlüssel MaSK, der anhand des verschlüsselter Sitzungsschlüssels berechnet wurde. Somit ist in dieser Variante der Sitzungsschlüssel SK eine kryptographisch verschlüsselte Form des Sitzungsschlüssels SK. Vorzugsweise ist die Verschlüsselung des Sitzungsschlüssels SK Seitenkanal-gehärtet. Dies ist vorteilhaft, da ein doppelter Schutz der Schlüsselübertragung erreicht wird. Dies wird beispielsweise durch die Verwendung des Übertragungskanals CH und zusätzlich durch Verwendung der Übertragung des maskierter Sitzungsschlüssels SK, der z. B. anhand des verschlüsselten Sitzungsschlüssels SK berechnet wurde. Das Bilden des maskierte Sitzungsschlüssel MaSK, der anhand des verschlüsselten Sitzungsschlüssels berechnet wurde, kann beispielsweise zweistufig unter Nutzung einer NLM-Funktion und einer kryptographischen Verschlüsselung (auch als Verschlüsselungsfunktion oder als kryptographische Verschlüsselungsfunktion bezeichnet) erfolgen. Dies ist vorheilhaft, da eine Seitenkanal-gehärtete Übertragung des Sitzungsschlüssels SK relativ leicht implementierbar ist, weil z. B. nicht ein generischer Kryptoalgorithmus, wie z.B. AES, Seitenkanal-gehärtet implementiert werden muss.

Das System kann beispielsweise in einem Gerät (z. B. ein Feldgerät) installiert sein oder ein Gerät sein. Ein Gerät, das das System umfasst, kann zusätzlich noch eine weitere oder mehrere weitere Komponente/n umfassen, wie beispielsweise einen weiteren Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Die Erfindung betrifft ein Verfahren, um einen Sitzungsschlüssel Seitenkanal-gehärtet an eine (Hardware) Crypto-Engine zu übermitteln. Dies ist besonders vorteilhaft, wenn der Sitzungsschlüssel einen hohen Schutzbedarf aufweist, sodass der Schutz durch die Übertragung über einen Secure Channel alleine nicht ausreicht, um das erforderliche Schutzniveau zu erreichen.

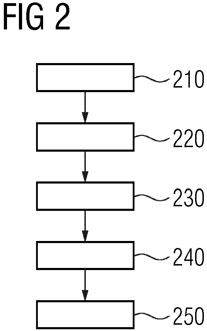

Die Fig. 2 zeigt ein weiteres Ausführungsbeispiel der Erfindung, das als Ablaufdiagramm für ein Verfahren dargestellt ist.

Das Verfahren ist vorzugsweise rechnergestützt realisiert, indem die Verfahrensschritte z. B. durch einen Prozessor ausgeführt werden.

Bei dem Verfahren handelt es sich beispielsweise um ein computerimplementiertes Verfahren zum Übertragen eines maskierten Sitzungsschlüssels.

Das Verfahren umfasst einen ersten Verfahrensschritt 210 zum Berechnen eines Sitzungsschlüssels.

Das Verfahren umfasst einen zweiten Verfahrensschritt 220 zum Berechnen eines Zufallswertes mittels eines Zufallszahlengenerators.

Das Verfahren umfasst einen dritten Verfahrensschritt 230 zum Berechnen eines Maskierungsschlüssel mittels einer Schlüsselmaskierungsfunktion anhand eines geheimen Schlüssels und des Zufallswertes.

Das Verfahren umfasst einen vierten Verfahrensschritt 240 zum Ermitteln eines maskierten Sitzungsschlüssels anhand des Sitzungsschlüssels und des Maskierungsschlüssels.

Das Verfahren umfasst einen fünften Verfahrensschritt 250 zum Übertragen des maskierten Sitzungsschlüssels an einen Empfänger.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Kryptographiesteuerungsvorrichtung aufweisend:
- ein Sitzungsschlüsselgenerierungsmodul (SG), wobei das Sitzungsschlüsselgenerierungsmodul dazu eingerichtet ist, einen Sitzungsschlüssel (SK) zu berechnen;
- einen Zufallsgenerator, wobei der Zufallsgenerator (TRNG) dazu eingerichtet ist, einen Zufallswert (R) zu berechnen;
- ein Maskierungsschlüsselberechnungsmodul (SM), wobei
∘ das Maskierungsschlüsselberechnungsmodul dazu eingerichtet ist, mittels einer Schlüsselmaskierungsfunktion anhand eines geheimen Schlüssels (SMK) und des Zufallswertes (R) einen Maskierungsschlüssel (KMK) zu berechnen,
∘ mittels des Maskierungsschlüssels (KMK) ein maskierter Sitzungsschlüssel (MaSK) anhand des Sitzungsschlüssels (SK) berechnet wird;
- ein Kommunikationsschnittstelle, wobei die Kommunikationsschnittstelle dazu eingerichtet ist, den maskierten Sitzungsschlüssel (MaSK) an einen Empfänger zu übertragen.

2. Kryptographiesteuerungsvorrichtung nach Anspruch 1, wobei die Schlüsselmaskierungsfunktion eine Non-Linear-Map-Funktion (NLM) ist.

3. Kryptographiesteuerungsvorrichtung nach einem der vorhergehenden Ansprüche, wobei
- der maskierte Sitzungsschlüssel (MaSK) ein verschlüsselter maskierter Sitzungsschlüssel (BMaSK) ist,
- der verschlüsselte maskierte Sitzungsschlüssel (BMaSK) mittels einer Verschlüsselungsfunktion unter Verwendung des Sitzungsschlüssels (SK) und des Maskierungsschlüssels (KMK) berechnet wird,
- zusätzlich zum maskierten Sitzungsschlüssel (MaSK), der ein verschlüsselter maskierter Sitzungsschlüssel (BMaSK) ist, der Zufallswert (R) an den Empfänger übertragen wird.

4. Kryptographiesteuerungsvorrichtung nach einem der vorhergehenden Ansprüche, wobei der geheime Schlüssel (SMK) ein für eine Seitenkanal-gehärtete Maskierung des Sitzungsschlüssels geeigneter Schlüssel ist.

5. Kryptographiesteuerungsvorrichtung nach einem der vorhergehenden Ansprüche, wobei die Verschlüsselungsfunktion eine asymmetrische kryptographische Verschlüsselungsfunktion oder eine symmetrische kryptographische Verschlüsselungsfunktion oder eine hybride kryptographische Verschlüsselungsfunktion ist.

6. Kryptographiesteuerungsvorrichtung nach einem der vorhergehenden Ansprüche, wobei der Empfänger eine Kryptographiebeschleunigungsvorrichtung ist.

7. Kryptographiesteuerungsvorrichtung nach einem der vorhergehenden Ansprüche, wobei die Übertragung des maskierten Sitzungsschlüssels (MaSK) über einen kryptographisch geschützten Übertragungskanal erfolgt.

8. Kryptographiesteuerungsvorrichtung nach einem der vorhergehenden Ansprüche, wobei der geheime Schlüssel (SMK) ein gerätespezifischer geheimer Schlüssel ist.

9. System, beispielsweise ein Gerät, aufweisend:
- eine Kryptographiesteuerungsvorrichtung nach einem der vorhergehenden Ansprüche;
- einen Empfänger, der beispielsweise eine Kryptographiebeschleunigungsvorrichtung ist;
- einen Übertragungskanal, wobei der Übertragungskanal dazu eingerichtet ist den Empfänger und die Kryptographiesteuerungsvorrichtung kommunikativ zu koppeln.

10. System nach Anspruch 9, wobei die Kryptographiesteuerungsvorrichtung und/oder der Empfänger jeweils ein integrierter Halbleiterbaustein ist.

11. System nach Anspruch 9 oder 10, wobei das System ein Hardware-Sicherheitsmodul oder ein Multi-Chipmodul ist.

12. Computerimplementiertes Verfahren zum Übertragen eines maskierten Sitzungsschlüssels (MaSK) mit folgenden Verfahrensschritten:
- Berechnen eines Sitzungsschlüssels (SK);
- Berechnen eines Zufallswertes (R) mittels eine Zufallszahlengenerators;
- Berechnen eines Maskierungsschlüssel (KMK) mittels einer Schlüsselmaskierungsfunktion anhand eines geheimen Schlüssels (SMK) und des Zufallswertes (R);
- Ermitteln eines maskierten Sitzungsschlüssels (MaSK) anhand des Sitzungsschlüssels (SK) und des Maskierungsschlüssels (KMK);
- Übertragen des maskierten Sitzungsschlüssels (MaSK) an einen Empfänger.

13. Computerprogrammprodukt mit Programmbefehlen zur Durchführung des Verfahrens nach Anspruch 12.

14. Bereitstellungsvorrichtung für das Computerprogrammprodukt nach Anspruch 13, wobei die Bereitstellungsvorrichtung das Computerprogrammprodukt speichert und/oder bereitstellt.
